# EUROPEAN PATENT SPECIFICATION

(11) **EP 2 674 822 B1**
(45) Date of publication and mention of the grant of the patent: **30.05.2018**
(21) Application number: 13171504.7
(22) Date of filing: 11.06.2013
(51) Int. Cl.: G05B 15/02, F24F 3/06, F24F 11/00

(54) **Connecting split HVAC systems to the internet and/or smart utility meters**
Verbinden von geteilten HVAC-Systemen mit dem Internet und/oder mit intelligenten Verbrauchsmessgeräten
Connexion de systèmes CVC distribués à Internet et/ou à des compteurs de consommation intelligents

(30) Priority: 15.06.2012 CN 201210202574; 13.07.2012 US 201213548552
(43) Date of publication of application: 18.12.2013
(73) Proprietor: Emerson Electric Co., St. Louis, MO 63136 (US)
(72) Inventor: Shan, Ping, St. Louis, MO 63136 (US)
(74) Representative: Awapatent AB

(56) References cited:
- EP-A1- 1 947 543
- WO-A1-2010/031012
- US-A1- 2007 114 295
- US-A1- 2010 245 094
- US-A1- 2010 307 733

## Description

### CROSS-REFERENCE TO RELATED APPLICATION

This application claims the benefit and priority of Chinese Patent of Invention Application No. 201210202574.8, filed June 15, 2012.

### FIELD

The present disclosure relates to systems and methods for connecting split HVAC systems (and/or for providing such connectivity) to the Internet and/or smart meters, thereby allowing a split HVAC system to be controllable via the Internet and/or a smart meter.

### BACKGROUND

This section provides background information related to the present disclosure which is not necessarily prior art.

A common type of heating, ventilation, and air conditioning (HVAC) system is a multi-split HVAC system, which may also be generally referred to as a ductless system. A typical multi-split HVAC system includes indoor and outdoor units and a programmable thermostat. The thermostat may be external to and remotely located from the indoor and outdoor units.

Another type of HVAC system includes single-split wall-mounted air conditioners, which are commonly used in Asian. This example air conditioner includes an outdoor unit split from the indoor unit. The outside unit includes the compressor and is located outside the room. The indoor unit or air handler includes the evaporator and is located in the room.

EP1947543 A1 discloses a ductless HVAC system controlled by light frequency signals, for example, in the infrared (IR) band. A repeater within the line-of-sight of the ductless HVAC system is used in concert with a remote thermostat. A user may operate the remote thermostat as desired, and the remote thermostat generates and broadcasts an RF signal stream responsive to the user-entry. This suitably encoded RF signal stream penetrates any wall or other opaque impediment to light frequency transmission and is received by the repeater, decoded by the repeater, re-encoded by the repeater into a signal suitable for driving an IR transmitter and broadcast as an IR beam to the receiver/interface.

US2007114295 discloses a system for remotely controlling an ambient temperature in a building is provided. The system comprises a thermostat, a computing device, and a thin client. The thermostat has one or more settings and is equipped for wireless communication. The computing device is equipped for wireless communication with the thermostat. The thin client device is remotely located from the thermostat and operatively coupled to the computing device through a wide area network. The thin client device permits manipulation of the one or more settings which are wirelessly communicated from the computing device to the thermostat such that the ambient temperature of the building is remotely controlled.

In WO2010031012 (A1), a method and system for communicating with an associated home appliance having a micro-controller includes providing a master device that emits a signal in response to data indicative of energy operational costs. One or more RFID tags receive the master device signal. The RFID tag(s) are connected to the associated home appliance micro-controller to control the operational mode of the home appliance. Four RFID tags are responsive to four distinct frequency signal emitted by the master device and are representative of different modes of operation for the associated home appliance.

### SUMMARY

This section provides a general summary of the disclosure, and is not a comprehensive disclosure of its full scope or all of its features.

Disclosed are exemplary embodiments of systems and methods for connecting split HVAC systems (and/or for providing such connectivity) to smart meters, thereby allowing a split HVAC system to be controllable via a smart meter. An exemplary embodiment includes a system for use with a split HVAC system having at least one outdoor unit and at least one indoor unit having a receiver. In this exemplary embodiment, the system comprises a control having connectivity to a smart utility meter. An equipment interface module is configured for wireless communication with the receiver of the at least one indoor unit and the control. The equipment interface module is operable for communicating instructions from the control to the receiver of the at least one indoor unit, thereby allowing operation of the at least one indoor unit to be controllable by a utility provider via the smart utility meter.

In another exemplary embodiment, a multi-split HVAC system generally includes a zone control, at least one outdoor unit, a plurality of indoor units each having an infrared receiver, and a plurality of radio frequency transceivers. Each radio frequency transceiver is configured for communication with the zone control via radio frequency signals and for communication with a corresponding one of the infrared receivers via infrared signals. The radio frequency transceivers are operable for communicating instructions from the zone control to the receivers, thereby allowing operation of all of the indoor units to be controllable by the zone control.

Another exemplary embodiment includes methods for wirelessly, remotely controlling split HVAC systems having at least one outdoor unit and at least one indoor unit. In an exemplary embodiment, a method generally includes remotely setting an instruction for the at least one indoor unit via a smart meter. This example method also wirelessly transmits the instruction to an equipment interface module that converts the instruction to a command for the at least one indoor unit. This example method further includes wirelessly transmitting the command to a receiver of the at least one indoor unit, whereby operation of the at least one indoor unit may be controllable according to the command.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 illustrates exemplary communication paths or flows between various components of a split HVAC system and a radio frequency (RF) transceiver in accordance with an exemplary embodiment, where the RF transceiver is shown communicating (via two-way communications) with a control and communicating (via one-way communications) with an infrared (IR) receiver and IR handheld remote control.
FIG. 2 is a perspective view of the RF transceiver shown in FIG. 1 mounted or installed on the indoor unit of the split HVAC system.
FIG. 3 illustrates a system architecture according to an exemplary embodiment.

### DETAILED DESCRIPTION

Example embodiments will now be described more fully with reference to the accompanying drawings.

In a split HVAC system, the indoor unit typically includes an onboard controller. A programmable thermostat may be configured to communicate with the onboard controller of the indoor unit. A wireless handheld remote control may be used to control the indoor unit, such as to program an operational set point for the indoor unit and/or to establish an operating mode for the indoor unit, *e.g.*, on, off, heat, or cool.

With conventional multi-split HVAC systems having multiple ductless indoor units, the inventor hereof has recognized that each indoor unit is isolated and individually controlled via its own onboard controller. The inventor has also recognized that conventional single-split and multi-split HVAC systems do not have connectivity to services beyond the immediate structure, such as connectivity to the Internet and/or to smart energy or utility meters. Without such connectivity, conventional split HVAC systems are thus also not controllable via the Internet or via a smart meter.

Accordingly, the inventor hereof has developed and discloses herein exemplary embodiments of systems and methods for providing such connectivity to a split HVAC system, to thereby allow the split HVAC system to be connected to (and also controllable via) a smart utility meter. As disclosed herein, the inventor's exemplary embodiments include a device configured to provide connectivity to smart meters, where the device is operable for bridging communications between one or more existing receivers (*e.g*., infrared receivers, *etc.)* of one or more indoor units and a smart utility meter. The device may also be referred to herein as a bridge device, radio frequency (RF) transceiver, equipment interface unit or module, *etc.*

In an exemplary embodiment, a bridge device includes an intermediate radio frequency (RF) transceiver that simulates an existing infrared handheld remote controller's output. The RF transceiver includes a port (*e.g*., an infrared port, *etc.)* for sending commands or instructions to the onboard controller, *etc.* of the indoor unit(s) for controlling, *e.g.*, changing, operation of the one or more outdoor units of the split HVAC system. Also in this exemplary embodiment, the RF transceiver is operable for communicating (two-way or bi-directional communications) with a thermostat or other controller, *e.g*., a programmable thermostat, zone control (*e.g.*, zone control without an internal temperature sensor, *etc.*)*, etc.* For example, the RF transceiver may communicate bi-directionally with a zone control or zone controller such that the RF transceiver may transmit and receive signals to/from the zone control (*e.g.*, by using ZigBee Smart Energy communication protocol and/or Wi-Fi, *etc.).* The RF transceiver may also communicate with a conventional handheld infrared controller. For example, the RF transceiver may receive (but not send) signals (one-way communications) from the conventional handheld infrared controller. The RF transceiver may also be configured for one-way communication with one or more existing infrared receivers of the one or more indoor units, such that the RF transceiver may send (but not receive) signals to the infrared receiver(s). Accordingly, the RF transceiver can receive signals from the handheld infrared controller and then send those received signals to the infrared receiver. In some embodiments, the handheld infrared controller may also be used to send signals directly to an infrared receiver of an indoor unit, thus bypassing the RF transceiver. The thermostat (*e.g.*, zone control, *etc.)* may be configured with connectivity to a smart utility meter, such that the RF transceiver (and thus the indoor unit) is also connectable to the smart utility meter via the connection to the thermostat. In this exemplary manner, connectivity to the Internet, to a smart utility meter, to smart energy thermostat, *etc.* may thus be provided without requiring or necessitating modifications for the receiver side of the split HVAC system.

Exemplary embodiments disclosed herein are operable to bridge the communication between infrared receivers of each indoor unit and a smart utility meter using an RF transceiver and a programmable control thermostat or zone controller, such that the HVAC system (*e.g*., and its multiple indoor units, *etc.)* can be controlled under a single controller. By providing connectivity to smart utility meters, exemplary embodiments also allow control of HVAC systems using the smart meters. For example, various units of an HVAC system may be controlled under a single controller, such that a user may easily change the operating mode, change temperature settings, turn the system on or off, *etc.* via the Internet.

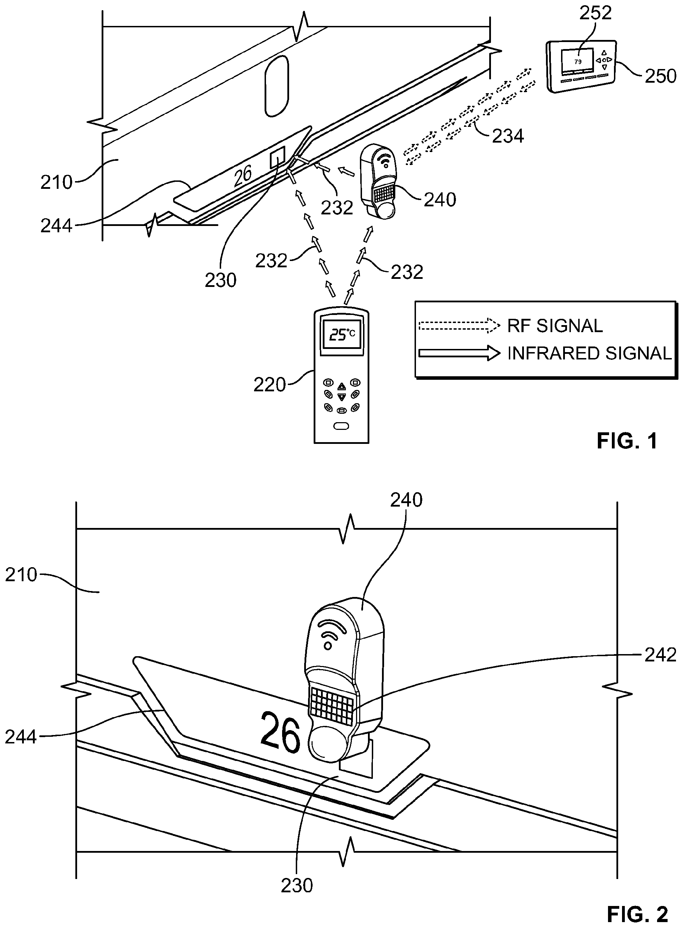

With reference now to the figures, FIG. 1 illustrates exemplary communication paths or flows between various components of a split HVAC system and an equipment interface unit or module in accordance with exemplary embodiments. The split HVAC system may comprise a single-split HVAC system or a multi-split HVAC system including at least one outdoor unit and multiple indoor units. As shown in FIG. 1, the HVAC system includes an indoor unit 210 and an infrared handheld infrared control 220. An infrared receiver 230 is operable for receiving wireless control instructions for the indoor unit 210, *e.g.,* from the remote control 220.

In this example embodiment shown in FIG. 1, the equipment interface unit or module comprises a radio frequency (RF) transceiver 240 configured for communicating (via two-way communications 234) with a zone control or controller 250. The transceiver 240 is also configured for communicating (via one-way communications 232) with the infrared (IR) receiver 230 and the IR handheld remote control 220. Accordingly, the zone controller 250 is operable for wirelessly controlling the indoor unit 210 via the transceiver 240, which communicates with both the zone controller 250 and the infrared receiver 230 to thereby bridge or provide a bridge between the zone controller 250 and the infrared receiver 230. In a multi-split HVAC system, each indoor unit 210 may be provided with a transceiver 240 to allow the zone controller 250 to communicate (and control operation thereof) with the indoor units 210 via the transceivers 240.

Continuing with this example embodiment, the transceiver 240 includes an emitter for sending instructions to an onboard controller of the indoor unit 210. The transceiver 240 also includes a collector for receiving instructions, e.g., from the handheld infrared remote control 220. In operation, the collector intercepts instruction signals from the handheld remote control 220 and may countermand the instruction, e.g., if contrary to an instruction from the zone controller 250. For example, if the instruction from the zone controller 250 indicates that the indoor unit 210 should be OFF while the instruction from the handheld remote control 220 indicates that the indoor unit 210 should be ON, then the transceiver 240 may receive via its collector the ON instruction from the handheld remote control 220 and send its own OFF instruction to the indoor unit 210 via its emitter so that the indoor unit 210 will maintain the OFF state as programmed by the zone controller 250.

The infrared receiver 230 is operatively coupled (e.g., installed, onboard, *etc.)* with the indoor unit 210. By way of example, the infrared receiver 230 may be the OEM infrared receiver that was originally built into or onboard the indoor unit 210. In operation as shown in FIG. 1, the transceiver 240 communicates with the zone controller 250 via RF signals 234 and communicates with the infrared receiver 230 via infrared signals 232. Also, the handheld remote control 220 communicates with the transceiver 240 or directly with the infrared receiver 230 via infrared signals 232.

The zone controller 250 has a display device 252 (*e.g.,* liquid crystal display (LCD) device, a touch screen, *etc.)* for displaying status information *(e.g.,* 79 degrees Fahrenheit in FIG. 1, *etc.)* for the HVAC system. This, in turn allows for convenient monitoring of the status of the HVAC system, such as current temperature, set point temperature, *etc.* The indoor unit 210 also includes a display device 244 (*e.g.,* liquid crystal display (LCD) device, a touch screen, *etc.)* for displaying status information (*e.g.,* 26 degrees Celsius in FIG. 1, *etc.)* for the indoor unit 210. This, in turn, allows for convenient monitoring of the status of the indoor unit 210 such as current temperature, set point temperature, *etc.*

By way of example, the zone controller 250 may be powered by one or more batteries and by a power stealing technique which supplements the one or more batteries. As another example, the zone controller 250 may be continuously powered by line voltage.

FIG. 2 shows the transceiver 240 mounted or installed (*e.g.,* adjacent the OEM infrared receiver 230, *etc.)* on or to the indoor unit 210. The indoor unit 210 may be controlled by the remote control 220 via the infrared receiver 230 or via the transceiver 240 as an intermediary between the remote control 220 and infrared receiver 230. For example, the remote control 220 may be used to set or program a set point temperature (*e.g.,* 25 degrees Celsius shown in FIG. 2, *etc.)* and/or change the operating mode of the indoor unit, *e.g.,* turn it on or off, change to a heat or cool cycle, *etc.* The indoor unit 210 may also be controlled via the zone controller 250 through the transceiver 240. In this example, the transceiver 240 includes a solar power supply (*e.g.,* solar panel 242 in FIG. 2, *etc.)* which charges one or more rechargeable batteries or capacitors of the transceiver 240 by light. This, in turn, helps extend the operational life of the transceiver. Alternative embodiments may include a transceiver having a different power source configuration.

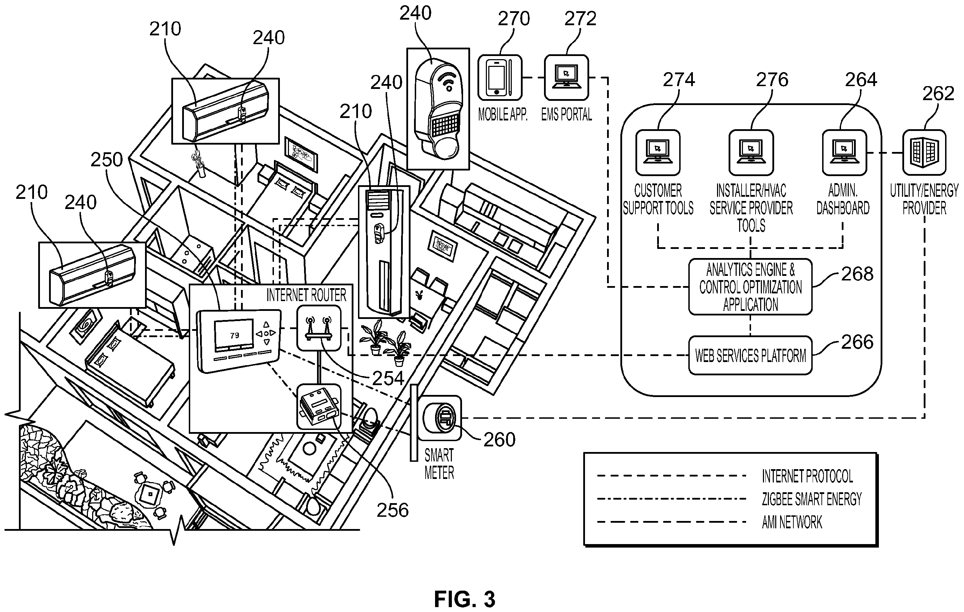

FIG. 3 illustrates an exemplary embodiment of a system architecture embodying one or more aspects of the present disclosure. In this exemplary embodiment, multiple indoor units 210 are controllable by the single common zone controller 250 via transceivers 240 and receivers 230 of the indoor units 210. Each indoor unit 210 includes a receiver 230 and is also provided with a transceiver 240, which is located relative to (*e.g.,* adjacent, *etc.)* the receiver 230 for communication therewith. For example, a transceiver 240 may be mounted or installed (*e.g.,* adhesively attached, bonded to a surface, *etc.)* on the indoor unit 210 adjacent to the indoor unit's receiver 230. The transceiver 240 is also located relative to the zone controller 250 for communication therewith. Accordingly, the indoor units 210 are thus controllable via the zone controller 250, which communicates (*e.g.,* sends commands, instructions, *etc.)* with the indoor units 210 via the transceivers 240 that operate as intermediaries or bridge devices that convey or transfer communications from the zone controller 250 to the receivers 230 of the indoor units 210. The transceivers 240 may communicate with the zone controller 250 via any suitable means. For example, FIG. 3 shows that the transceivers 240 and zone controller 250 communicate by using ZigBee Smart Energy communication protocol and/or Wi-Fi, *etc.* In a preferred embodiment, the transceivers 240 and zone controller 250 communicate by using ZigBee low power wireless communication using Smart Energy profile.

With continued reference to FIG. 3, the zone controller 250 is configured with connectivity to allow connection with a smart meter 260 and with the Internet. As shown, the zone controller 250 may be connected (*e.g.,* via Wi-Fi, *etc.)* to the Internet via a router 254 using the Internet Protocol (IP). The zone controller 250 may also be connected (*e.g.,* using ZigBee Smart Energy communication protocol, *etc.)* directly to the smart meter 260 and/or indirectly to the smart meter via a modem 256.

Continuing with this example, the smart meter 260 may be connected *(e.g.,* using AMI Network, *etc.)* to an energy or utility provider 262. The utility/energy provider 262 may also be connected to an Administrative Dashboard 264 via the Internet. Accordingly, the utility/energy provider 262 may send instructions, requests and/or commands to the zone controller 250, such as a request for reduced operation or energy reduction to thereby have the zone controller 250 respond accordingly, *e.g.,* discontinue use of one or more of the indoor units 210, *etc.*

Also shown in FIG. 3 is a Web Services Platform 266 that is connectable to the zone controller 250 via the Internet through the router 254. Various applications and/or tools may be accessible to a user and/or the utility/energy provider 262 via the Internet. For example, an Analytics Engine and Control Optimization Application 268 connected and accessible via the Web Services Platform 266. Also shown are a mobile app 270 *(e.g.,* an iPhone® app, an iPad® app, an Android® app, *etc.),* Portal 272, Customer Support Tools 274, and Installer/HVAC Service Provider Tools 276. Accordingly, a user can wirelessly, remotely control operation of the indoor units 210 via the connection of the zone controller 250 to the Internet, such as to change the operating mode *(e.g.,* heat, cool, on, or off), adjust temperature, *etc.* The utility/energy provider 262 may also wirelessly, remotely control operation of the indoor units 210 through the smart meter 260.

In an exemplary embodiment, a zone controller 250 has programmed schedules and set point temperatures for each remote zone, which schedules and set point temperatures may be the same or different for the various zones. In this example, indoor units 210 may each include their own thermostat and internal temperature sensor *(e.g.,* thermistor, *etc.)* as part of its built-in control. The zone controller 250 does not include a temperature sensor in this example. In operation, the temperature sensor of each indoor unit 210 senses the current indoor temperature for its respective zone. Then, the onboard control of each indoor unit 210 compare the sensed temperature for its zone with the set point temperature it received from the zone controller 250 via the transceiver 240. This comparison is used by the onboard controller of the indoor unit 210 to command and operate the indoor unit 210 as a function of the comparison, e.g., to determine whether to turn ON or OFF the indoor unit 210 or to determine whether to enter a heat cycle or cool cycle.

In another exemplary embodiment, the zone controller 250 includes a temperature sensor. In this example, the zone controller 250 sends sensed temperature to the equipment interface modules or units (*e.g.,* transceivers 240, *etc.).* The equipment interface units compares a set point temperature *(e.g.,* stored in its local memory, *etc.)* with the sensed temperature received from the zone controller 250. This comparison is then used by the equipment interface units to determine the commands, instructions, *etc.* to send to the indoor unit 210 for operating the indoor unit 210 as a function of the comparison, *e.g.,* to determine whether to turn ON or OFF the indoor unit 210 or to determine whether to enter a heat cycle or cool cycle.

Aspects of the present disclosure also relate to exemplary operating processes or methods for controlling a split HVAC system according to an exemplary embodiment. In an example method, instructions are initially set or programmed for the operation of the one or more indoor units of the split HVAC system. These instructions may be set, for example, by a user (*e.g.,* homeowner, *etc.)* entering the instructions via a programmable thermostat or a zone control *(e.g.,* zone controller 250, *etc.)* or via the Internet by accessing an application, tool, platform, *etc.* According to the invention, the instructions are also or alternatively set by a utility/energy provider via a smart meter (*e.g.,* smart meter 260, *etc.).* When the instructions are set via the Internet or via a smart meter, the instructions are conveyed, transmitted, or communicated to the zone controller. The zone controller, in turn, conveys, transmits, or communicates the instructions to an equipment interface unit or module (*e.g.,* via RF signals to an RF transceiver 240, *etc.).* The equipment interface unit converts the instructions to an appropriate command for the indoor unit and conveys, transmits, or communicates the command to the indoor unit (*e.g.,* via infrared signals to a receiver 230 of an indoor unit 210, *etc.).* The receiver then conveys, transmits, or communicates the command to the indoor unit.

Aspects of the present disclosure also relate to exemplary embodiments of methods for comparing a sensed temperature with a set point temperature for turning on or off the system, changing an operating mode, *etc.* In an example method, a zone control *(e.g.,* zone controller 250, *etc.)* conveys, transmits, or communicates a set point temperature to an equipment interface unit or module *(e.g.,* an RF transceiver 240, *etc.),* which may store the set point temperature in a local member. The equipment interface unit may include a temperature sensor that senses the temperature of the zone, room, or interior space in which the equipment interface unit and indoor unit is located. Alternatively, the equipment interface unit may receive a sensed temperature from a remote temperature sensor, *e.g.,* a temperature sensor internal to or an onboard thermostat of an indoor unit, a temperature sensor internal to the zone control, *etc.* The equipment interface unit compares the sensed temperature with the set point temperature received from the zone controller. If the sensed temperature is higher than the set point temperature, the equipment interface unit conveys, transmits, or communicates an ON command to the indoor unit (*e.g.,* via IR signal to an IR receiver 230, *etc.)* to start a cool cycle or a command to change from a heat cycle to a cool cycle. If the sensed temperature is lower than the set point temperature, the equipment interface unit conveys, transmits, or communicates an OFF command to the indoor unit to stop the cool cycle and/or a command to change from the cool cycle to a heat cycle.

In another exemplary embodiment of a method, a temperature sensor in a zone control senses the temperature of the inside space. The zone control conveys, transmits, or communicates the sensed temperature to an equipment interface unit or module *(e.g.,* an RF transceiver 240, *etc.).* The equipment interface unit compares a set point temperature (*e.g.,* stored in a local memory, *etc.)* with the sensed temperature received from the zone control. If the sensed temperature is higher than the set point temperature, the equipment interface unit conveys, transmits, or communicates an ON command to the indoor unit (*e.g.,* via IR signal to an IR receiver 230, *etc.)* to start a cool cycle or a command to change from a heat cycle to a cool cycle. If the sensed temperature is lower than the set point temperature, the equipment interface unit conveys, transmits, or communicates an OFF command to the indoor unit to stop the cool cycle and/or a command to change from the cool cycle to a heat cycle.

Accordingly, exemplary aspects of the present disclosure are directed towards a common control for a multi-split HVAC system (ductless system), in which a single device is able to replace the individual indoor unit controls which are typically provided with a ductless system. The indoor unit typically has a wireless remote control which is used to program an operational set point for the unit and to establish the operating mode, *e.g.,* heat, cool, on, or off. In exemplary embodiments, a common control (*e.g.,* programmable thermostat, zone control, *etc.)* is installed in a centralized or central location of a home, apartment, *etc.* The control communicates wirelessly to an equipment interface unit, module, or device that is attached to an indoor unit of the HVAC system. The interface module (*e.g.,* RF transceiver, *etc.)* receives a wireless command from the control and then converts the command into the appropriate command for the indoor unit. The indoor unit is configured to receive instructions via an IR signal. The OEM (original equipment manufacturers) handheld wireless remote control units typically use an IR communication scheme for programming of the indoor unit. Thus, the interface module is configured to use the same method to transmit commands to the indoor unit as the OEM remote control. The interface module may thus have to "learn" the specific command sets of a specific ductless system in which it is being used.

In addition to being able to send commands to one or more indoor units, the control is also configured (*e.g.,* has an antenna, radio, *etc.)* for connection to the Internet and/or a smart meter. This enables a user to remotely access the settings in the control (*e.g.,* set or change the settings, *etc.).* This also or alternatively enables a utility provider *(e.g.,* energy company, *etc.)* to send a command for energy reduction to the control, to thereby have the control respond accordingly, *e.g.,* discontinue use of the ductless HVAC system, *etc.*

The control itself may be powered by a power stealing technique, which may supplement one or more batteries. Or, the control may be continuously powered by line voltage. The interface module (*e.g.,* RF transceiver, *etc.)* may have a solar power supply, which charges one or more batteries or capacitors to extend operational life.

Exemplary embodiments disclosed herein may be configured with the ability to allow a control (*e.g.,* programmable thermostat, zone control, control with or without an internal temperature sensor, *etc.)* to operate multiple units of a ductless system, such as a ductless system having one outdoor compressor and multiple indoor units or a ductless system having two or more indoor units each with its own outdoor unit. Accordingly, exemplary embodiments may thus provide connectivity to the Internet and/or to a smart utility meter, remote access, and/or multiple unit control capability.

Exemplary embodiments may include equipment interface modules having separate infrared emitters and collectors. The emitter is operable for sending instructions to the onboard control of an indoor unit via the IR protocol. The collector is operable to intercept and countermand signals from a handheld IR remote control, *e.g.,* an OEM remote control that originally came with a ductless unit. For example, if the control has indicated the ductless unit should be off, the user might be able to override that OFF command using a local handheld IR remote control. In exemplary embodiments, however, an equipment interface module is configured to sense via its collector the ON command from the IR handheld remote control unit, and then immediately send its own OFF signal via its IR emitter to maintain the programmed OFF state.

In an exemplary embodiment the control is a zone control that does not have an internal temperature sensor. Because each indoor unit in a ductless system typically has its own thermostat and temperature sensor as part of its built-in control. Therefore, the zone control does not also need an internal temperature sensor. The zone control may be operable to maintain a programmed schedule (*e.g.,* wake, leave, return, sleep or home, sleep, away, *etc.),* the set point temperature for each remote zone, and the state (ON or OFF) for each remote zone. Then, the onboard controllers in each of the indoor units would use this set point information to determine when to turn on and off. The indoor unit controller may have a set point and dead band around the set point, which is used to determine whether to enter a heat or cool cycle.

In an exemplary embodiment, there may be a temperature sensor in the equipment interface unit or module. The equipment interface unit may be configured and be operable to compare a stored set point (received from the zone control) to a sensed temperature received from its own temperature sensor. When the sensed temperature is beyond a first predetermined amount (*e.g.,* 1.5 °F, *etc.)* of the stored set point temperature, the equipment interface unit may the send an ON command to the onboard control of the indoor unit. When the sensed temperature is within a second predetermined amount (*e.g.,* .5 °F, *etc.)* of the stored set point temperature, the equipment interface unit sends an OFF command to the onboard control of the indoor unit.

Another exemplary embodiment includes a zone control having a temperature sensor. In this example, the zone control is operable for sending the sensed temperature to each of the interface units installed to the indoor units of the HVAC system. Each interface unit may then compare the value of the sensed temperature it received from the zone control to a stored set point, and then command the indoor unit (to which it is installed) as a function of the comparison. Accordingly, this exemplary embodiment thus makes use of the inherent control abilities of the indoor unit onboard controllers.

In an exemplary embodiment, the equipment interface unit or module comprises an RF transceiver configured for two-way communications with a programmable control thermostat and configured for one-way communication with an existing infrared receiver of an indoor unit. A homeowner may still use the OEM remote control, *e.g.,* as shown in FIG. 1. The RF transceiver may pass the homeowner's air conditioning usage pattern to the programmable control thermostat. The programmable control thermostat may transfer the information to a web service platform via the Internet. Background software may control optimization automatically. And, if the house already has a smart meter installed, the programmable control thermostat may also perform demand response load control through the RF transceiver.

Exemplary embodiments disclosed herein may provide one or more (but not necessarily any or all) of the following advantages. For example, exemplary embodiments disclosed herein include devices operable to convert a collection of single unitary ductless units into a zoned system under the control of a single thermostat. Also in exemplary embodiments, such devices may also be used to make the converted zoned system available for control via the Internet, a smart energy meter, *etc.* With exemplary embodiments, an HVAC system may thus be controlled remotely with a smart meter and/or over the Internet, *e.g.,* by a home owner or other user using a computer or Internet-enabled portable device, such as a smart phone, laptop, tablet, Blackberry® device, Android® device, an iPhone® device, iPad® tablet, *etc.*

Also by way of example, exemplary embodiments may enable connection of an infrared controlled air conditioner to a smart energy application (e.g., demand response/load control (DRLC), *etc.)* and/or may enable a homeowner to remotely control the HVAC system via a portable communication device *(e.g.,* smart phone or device mentioned above, *etc.),* a personal computer, *etc.* Exemplary embodiments may enable a service software company to optimize home owner's energy consumption and comfort level. Also, exemplary embodiments may allow a service provider for the HVAC system to remotely optimize the system with the proper software and/or software update, *etc.* Exemplary embodiments may be easily installed or retrofitted as a simple add-on without having to cut wiring during installation. Exemplary embodiments may include an RF transceiver with a solar panel such that the RF transceiver has a relatively long lasting life. Exemplary embodiments may not require or need a homeowner to run the learning routine for the RF transceiver to learn the infrared remote controller. The work can be done via a computer or other device because the service platform can find homeowner's infrared remote controller's type and automatically download to the RF transceiver.

Exemplary embodiments disclosed herein may be used with various configurations of HVAC systems. By way of example, exemplary embodiments may be used with single-split systems or multi-split HVAC systems, such as a ductless system with one outdoor unit/compressor and multiple indoor units, a ductless system with two or more indoor units each with its own outdoor unit, a unitary ductless air conditioning or heat pump system with one outdoor unit and one indoor unit programed by an infrared handheld unit, single-split wall-mounted air conditioner, single-split heat pump system, window room air conditioner, *etc.* Exemplary embodiments may also be used with a forced air system. For example, an exemplary embodiment includes a thermostat for a forced air system, where the thermostat has a zone control provision to enable the control of a remote ductless system such as a single-split system or a window air conditioner.

## Claims

1. A system for use with a split HVAC system including at least one outdoor unit and at least one indoor unit (210) having a receiver (230), the system comprising:
a control (250) having connectivity to a smart utility meter (260); and
an equipment interface module (240) configured for wireless communication with the receiver of the at least one indoor unit (210) and the control (250), such that the equipment interface module (240) is operable for communicating instructions from the control (250) to the receiver (230) of the at least one indoor unit (210), thereby allowing operation of the at least one indoor unit (210) to be controllable by a utility provider (262) via the smart utility meter (260),
wherein the equipment interface module (240) comprises a collector for intercepting contrary instructions from a handheld infrared remote control (220) of the at least indoor unit (210), to thereby allow the equipment interface module (240) to countermand the contrary instructions.

2. The system of claim 1, wherein:
the control is configured with connectivity to the Internet, such that operation of the at least one indoor unit is controllable by a user via the Internet when the control is connected to the Internet.

3. The system of any one of the preceding claims, wherein:
the equipment interface module is configured for communication with an infrared receiver of the at least one indoor unit, whereby the equipment interface module is operable for communicating instructions from the control via infrared signals to the infrared receiver; and/or
the equipment interface module comprises a radio frequency transceiver (240) configured for communication with the control via radio frequency signals.

4. The system of any one of the preceding claims, wherein:
the equipment interface module is configured for bi-directional communication with the control via sending and receiving radio frequency signals to/from the control; and
the equipment interface module is configured for unidirectional communication with the receiver of the at least one indoor unit by sending infrared signals to the receiver.

5. The system of any one of the preceding claims, wherein the equipment interface module is configured to be operable as a communications bridge between the control and the receiver of the at least one indoor unit, whereby the equipment interface module is operable for converting instructions from the control to appropriate commands for the at least one indoor unit.

6. The system of any one of the preceding claims, wherein the equipment interface module comprises:
an emitter for sending instructions from the control to an infrared receiver of the at least indoor unit, which instructions are for an onboard controller of the at least one indoor unit.

7. The system of any one of the preceding claims, wherein the control comprises a zone control (250) having one or more programmed schedules and set point temperatures for each of a plurality of zones in which is located a corresponding one of multiple indoor units of an multi-split HVAC system.

8. The system of claim 7, wherein the system includes an equipment interface module for each indoor unit of the multi-split HVAC system and that is operable for comparing a sensed temperature of the zone in which it is located with a set point temperature and for sending an appropriate command to the indoor unit in that zone.

9. The system of claim 8, wherein:
the zone control includes a temperature sensor, and the zone control is operable for sending the sensed temperature to the equipment interface modules; and/or
each equipment interface module includes a temperature sensor and is operable for comparing the temperature sensed thereby with a set point temperature from the zone control; and/or
each indoor unit includes a temperature sensor and an onboard controller operable for comparing a sensed temperature from the temperature sensor with a set point temperature from the zone control.

10. A multi-split HVAC system comprising at least one outdoor unit and a plurality of indoor units, and the system of any one of claims 1 to 6, wherein:
the equipment interface module comprises a plurality of equipment interface modules, one for each indoor unit; and
the control comprises a zone control operable for controlling operation of all of the indoor units by communicating with the equipment interface module and the receiver of each indoor unit.

11. A multi-split HVAC system comprising:
at least one outdoor unit;
a plurality of indoor units (210) each having an infrared receiver (230);
the system of any one of claims 1 to 6;
wherein the control comprises a zone control (250); and
wherein the equipment interface module comprises a plurality of radio frequency transceivers (240), each of which is configured for communication with the zone control (250) via radio frequency signals and for communication with a corresponding one of the infrared receivers (230) via infrared signals, whereby the radio frequency transceivers (240) are operable for communicating instructions from the zone control (250) to the receivers (230), thereby allowing operation of all of the indoor units (210) to be controllable by the zone control (250).

12. The multi-split HVAC system of claim 10 or 11, wherein:
the zone control is configured with connectivity to the Internet, such that operation of all of the indoor units is controllable by a user via the Internet when the zone control is connected to the Internet.

13. A method for wirelessly, remotely controlling a split HVAC system having at least one outdoor unit and at least one indoor (210) unit comprising:
a utility provider remotely setting an instruction for the at least one indoor unit (210) via a smart utility meter (260) connected to a zone control (250);
wirelessly transmitting the instruction from the zone control (250) to an equipment interface module (240) that converts the instruction to a command for the at least one indoor unit (210); and
wirelessly transmitting the command to a receiver (230) of the at least one indoor unit (210), whereby operation of the at least one indoor unit (210) may be controllable according to the command,
wherein the equipment interface module (240) comprises a collector for intercepting contrary instructions from a handheld infrared remote control (220) of the at least indoor unit (210), to thereby allow the equipment interface module (240) to countermand the contrary instructions.

14. The method of claim 13, wherein the method includes:
a user remotely setting an instruction for the at least one indoor unit via zone control or the Internet connected to the zone control.

15. The method of claim 13 or 14, wherein:
wirelessly transmitting the instruction to an equipment interface module comprises wirelessly transmitting radio frequency signals to a radio frequency transceiver; and wirelessly transmitting the command to a receiver comprises wirelessly transmitting infrared signals to an infrared receiver of the at least one indoor unit; and/or
wirelessly transmitting the instruction to an equipment interface module comprises wirelessly transmitting the instructions to a plurality of equipment interface modules; and wirelessly transmitting the command to a receiver of the at least one indoor unit comprises wirelessly transmitting the command to a plurality of receivers of a plurality of indoor units, such that operation of all of the indoor units is controllable by the zone control.

## Patentansprüche

1. System zur Verwendung mit einem geteilten HVAC-System, das wenigstens eine Außeneinheit und wenigstens eine Inneneinheit (210) mit einem Empfänger (230) aufweist, wobei das System umfasst;
eine Steuereinrichtung (250) mit Konnektivität zu einem intelligenten Verbrauchsmessgerät (260); und
ein Geräte-Schnittstellenmodul (240), das für drahtlose Kommunikation mit dem Empfänger der wenigstens einen Inneneinheit (210) und der Steuereinrichtung (250) ausgelegt ist, so dass das Geräte-Schnittstellenmodul (240) in der Lage ist, Anweisungen von der Steuereinrichtung (250) an den Empfänger (230) der wenigstens einen Inneneinheit (210) zu übermitteln und dadurch zu ermöglichen, dass der Betrieb der wenigstens einen Inneneinheit (210) durch einen Versorgungsdienstleister (262) über das intelligente Verbrauchsmessgerät (260) steuerbar ist,
wobei das Geräte-Schnittstellenmodul (240) einen Sammler zum Abfangen gegenteiliger Anweisungen von einer Infrarot-Handfernbedienung (220) der wenigstens einen Inneneinheit (210) umfasst, um dadurch dem Geräte-Schnittstellenmodul (240) zu ermöglichen, die gegenteiligen Anweisungen aufzuheben.

2. System nach Anspruch 1, wobei:
die Steuereinrichtung mit Konnektivität zum Internet ausgelegt ist, so dass der Betrieb der wenigstens einen Inneneinheit durch einen Benutzer über das Internet steuerbar ist, wenn die Steuereinrichtung mit dem Internet verbunden ist.

3. System nach einem der vorhergehenden Ansprüche, wobei:
das Geräte-Schnittstellenmodul für eine Kommunikation mit einem Infrarot-Empfänger der wenigstens einen Inneneinheit ausgelegt ist, wodurch das Geräte-Schnittstellenmodul in der Lage ist, Anweisungen von der Steuereinrichtung über Infrarotsignale an den Infrarot-Empfänger zu übermitteln; und/oder
das Geräte-Schnittstellenmodul einen Hochfrequenzempfänger (240) umfasst, der für eine Kommunikation mit der Steuereinrichtung über Hochfrequenzsignale ausgelegt ist.

4. System nach einem der vorhergehenden Ansprüche, wobei:
das Geräte-Schnittstellenmodul für bidirektionale Kommunikation mit der Steuereinrichtung durch Senden und Empfangen von Hochfrequenzsignalen an die/von der Steuereinrichtung ausgelegt ist; und
das Geräte-Schnittstellenmodul für unidirektionale Kommunikation mit dem Empfänger der wenigstens einen Inneneinheit durch Senden von Infrarotsignalen an den Empfänger ausgelegt ist.

5. System nach einem der vorhergehenden Ansprüche, wobei das Geräte-Schnittstellenmodul dafür ausgelegt ist, als eine Kommunikationsbrücke zwischen der Steuereinrichtung und dem Empfänger der wenigstens einen Inneneinheit betreibbar zu sein, wodurch das Geräte-Schnittstellenmodul in der Lage ist, Anweisungen von der Steuereinrichtung in entsprechende Befehle für die wenigstens eine Inneneinheit umzuwandeln.

6. System nach einem der vorhergehenden Ansprüche, wobei das Geräte-Schnittstellenmodul umfasst:
einen Sender zum Senden von Anweisungen von der Steuereinrichtung an einen Infrarot-Empfänger der wenigstens einen Inneneinheit, wobei diese Anweisungen für einen eingebauten Regler der wenigstens einen Inneneinheit bestimmt sind.

7. System nach einem der vorhergehenden Ansprüche, wobei die Steuereinrichtung eine Zonensteuereinrichtung (250) mit einer oder mehreren programmierten Zeitplänen und Solltemperaturen für jede von mehreren Zonen, in denen eine entsprechende von mehreren Inneneinheiten eines Multi-Split-HVAC-Systems angeordnet ist, umfasst.

8. System nach Anspruch 7, wobei das System ein Geräte-Schnittstellenmodul für jede Inneneinheit des Multi-Split-HVAC-Systems aufweist, welches in der Lage ist, eine erfasste Temperatur der Zone, in welcher diese sich befindet, mit einer Solltemperatur zu vergleichen und einen entsprechenden Befehl an die Inneneinheit in dieser Zone zu senden.

9. System nach Anspruch 8, wobei:
die Zonensteuereinrichtung einen Temperatursensor aufweist und die Zonensteuereinrichtung in der Lage ist, die erfasste Temperatur an die Geräte-Schnittstellenmodule zu senden; und/oder
jedes Geräte-Schnittstellenmodul einen Temperatursensor aufweist und in der Lage ist, die mit ihm erfasste Temperatur mit einer Solltemperatur von der Zonensteuereinrichtung zu vergleichen; und/oder
jede Inneneinheit einen Temperatursensor und einen eingebauten Regler aufweist, der in der Lage ist, eine erfasste Temperatur von dem Temperatursensor mit einer Solltemperatur von der Zonensteuereinrichtung zu vergleichen.

10. Multi-Split-HVAC-System, welches wenigstens eine Außeneinheit und mehrere Inneneinheiten sowie das System nach einem der Ansprüche 1 bis 6 umfasst, wobei:
das Geräte-Schnittstellenmodul mehrere Geräte-Schnittstellenmodule umfasst, eines für jede Inneneinheit; und
die Steuereinrichtung eine Zonensteuereinrichtung umfasst, die in der Lage ist, den Betrieb aller Inneneinheiten durch Kommunizieren mit dem Geräte-Schnittstellenmodul und dem Empfänger jeder Inneneinheit zu steuern.

11. Multi-Split-HVAC-System, welches umfasst:
wenigstens eine Außeneinheit;
mehrere Inneneinheiten (210), die jeweils einen Infrarot-Empfänger (230) aufweisen;
das System nach einem der Ansprüche 1 bis 6;
wobei die Steuereinrichtung eine Zonensteuereinrichtung (250) umfasst; und
wobei das Geräte-Schnittstellenmodul mehrere Hochfrequenz-Sendeempfänger (240) umfasst, von denen jeder für eine Kommunikation mit der Zonensteuereinrichtung (250) über Hochfrequenzsignale und für eine Kommunikation mit einem entsprechenden der Infrarot-Empfänger (230) über Infrarotsignale ausgelegt ist, wodurch die Hochfrequenz-Sendeempfänger (240) in der Lage sind, Anweisungen von der Zonensteuereinrichtung (250) an die Empfänger (230) zu übermitteln, und dadurch ermöglichen, dass der Betrieb aller Inneneinheiten (210) durch die Zonensteuereinrichtung (250) steuerbar ist.

12. Multi-Split-HVAC-System nach Anspruch 10 oder 11, wobei:
die Zonensteuereinrichtung mit Konnektivität zum Internet ausgelegt ist, so dass der Betrieb aller Inneneinheiten durch einen Benutzer über das Internet steuerbar ist, wenn die Zonensteuereinrichtung mit dem Internet verbunden ist.

13. Verfahren zur drahtlosen Fernsteuerung eines geteilten HVAC-Systems mit wenigstens einer Außeneinheit und wenigstens einer Inneneinheit (210), welches umfasst:
Erteilen einer Anweisung durch einen Versorgungsdienstleister per Fernsteuerung für die wenigstens eine Inneneinheit (210) über ein intelligentes Verbrauchsmessgerät (260), das mit einer Zonensteuereinrichtung (250) verbunden ist;
drahtloses Übertragen der Anweisung von der Zonensteuereinrichtung (250) zu einem Geräte-Schnittstellenmodul (240), welches die Anweisung in einen Befehl für die wenigstens eine Inneneinheit (210) umwandelt; und
drahtloses Übertragen des Befehls zu einem Empfänger (230) der wenigstens einen Inneneinheit (210), wobei der Betrieb der wenigstens einen Inneneinheit (210) gemäß dem Befehl steuerbar sein kann,
wobei das Geräte-Schnittstellenmodul (240) einen Sammler zum Abfangen gegenteiliger Anweisungen von einer Infrarot-Handfernbedienung (220) der wenigstens einen Inneneinheit (210) umfasst, um dadurch dem Geräte-Schnittstellenmodul (240) zu ermöglichen, die gegenteiligen Anweisungen aufzuheben.

14. Verfahren nach Anspruch 13, wobei das Verfahren umfasst:
Erteilen einer Anweisung durch einen Benutzer per Fernsteuerung für die wenigstens eine Inneneinheit über die Zonensteuereinrichtung oder das mit der Zonensteuereinrichtung verbundene Internet.

15. Verfahren nach Anspruch 13 oder 14, wobei:
das drahtlose Übertragen der Anweisung zu einem Geräte-Schnittstellenmodul das drahtlose Übertragen von Hochfrequenzsignalen zu einem Hochfrequenz-Sendeempfänger umfasst; und das drahtlose Übertragen des Befehls zu einem Empfänger das drahtlose Übertragen von Infrarotsignalen zu einem Infrarot-Empfänger der wenigstens einen Inneneinheit umfasst; und/oder
das drahtlose Übertragen der Anweisung zu einem Geräte-Schnittstellenmodul das drahtlose Übertragen der Anweisungen zu mehreren Geräte-Schnittstellenmodulen umfasst; und das drahtlose Übertragen des Befehls zu einem Empfänger der wenigstens einen Inneneinheit das drahtlose Übertragen des Befehls zu mehreren Empfängern mehrerer Inneneinheiten umfasst, so dass der Betrieb aller Inneneinheiten durch die Zonensteuereinrichtung steuerbar ist.

## Revendications

1. Système à utiliser avec un système CVC distribué incluant au moins une unité extérieure et au moins une unité intérieure (210) ayant un récepteur (230), le système comprenant :
une commande (250) ayant une connectivité à un compteur de consommation intelligent (260) ; et
un module d'interface d'équipement (240) configuré pour une communication sans fil avec le récepteur d'au moins une unité intérieure (210) et la commande (250), de sorte que le module d'interface d'équipement (240) soit opérationnel pour communiquer des instructions provenant de la commande (250) au récepteur (230) d'au moins une unité intérieure (210), en permettant ainsi que le fonctionnement d'au moins une unité intérieure (210) puisse être commandé par un fournisseur de services (262) via le compteur de consommation intelligent (260),
dans lequel le module d'interface d'équipement (240) comprend un collecteur pour intercepter des instructions contraires provenant d'une commande à distance à infrarouges portative (220) d'au moins une unité intérieure (210) pour permettre au module d'interface d'équipement (240) d'annuler les instructions contraires.

2. Système selon la revendication 1, dans lequel :
la commande est configurée avec une connectivité à l'Internet, de sorte que le fonctionnement d'au moins une unité intérieure puisse être commandée par un utilisateur via l'Internet lorsque la commandée est connectée à l'Internet.

3. Système selon une quelconque des revendications précédentes, dans lequel :
le module d'interface d'équipement est configuré pour une communication avec un récepteur infrarouge d'au moins une unité intérieure, moyennant quoi le module d'interface est opérationnel pour communiquer des instructions de la commande via des signaux infrarouges au récepteur à infrarouges ; et/ou
le module d'interface d'équipement comprend un émetteur récepteur de radiofréquence (240) configuré pour une communication avec la commande via les signaux de radiofréquence.

4. Système selon une quelconque des revendications précédentes, dans lequel :
le module d'interface d'équipement est configuré pour une communication bidirectionnelle avec la commande via l'émission et la réception de signaux de radiofréquence vers/depuis la commande ; et
le module d'interface d'équipement est configuré pour une communication unidirectionnelle avec le récepteur d'au moins une unité intérieure en envoyant des signaux infrarouges vers le récepteur.

5. Système selon une quelconque des revendications précédentes, dans lequel le module d'interface d'équipement est configuré pour être opérationnel comme un pont de communication entre la commande et le récepteur d'au moins une unité intérieure, moyennant quoi le module d'interface d'équipement est opérationnel pour convertir des instructions provenant de la commande en commandes appropriées pour au moins une unité intérieure.

6. Système selon une quelconque des revendications précédentes, dans lequel le module d'interface d'équipement comprend :
un émetteur pour envoyer des instructions de la commande à un récepteur infrarouge d'au moins une unité intérieure, lesquelles instructions sont destinées à un contrôleur embarqué d'au moins une unité intérieure.

7. Système selon une quelconque des revendications précédentes, dans lequel la commande comprend une commande de zone (250) ayant une ou plusieurs programmations programmées et des températures de point de consigne pour chacune d'une pluralité de zones dans laquelle est située une unité correspondante d'unités intérieures multiples d'un système CVC multi-distribué.

8. Système selon la revendication 7, dans lequel le système inclut un module d'interface d'équipement pour chaque unité intérieure du système CVC multi-distribué et qui est opérationnel pour comparer une température détectée de la zone dans laquelle il est situé avec une température de point de consigne et pour envoyer une commande appropriée à l'unité intérieure dans cette zone.

9. Système selon la revendication 8, dans lequel :
la commande de zone inclut un capteur de température et la commande de zone est opérationnelle pour envoyer la température détectée au module d'interface d'équipement ; et/ou
chaque module d'interface d'équipement inclut un capteur de température et est opérationnel pour comparer la température détectée de cette manière avec une température de point de consigne provenant de la commande de zone ; et/ou
chaque unité intérieure inclut un capteur de température et un contrôleur embarqué opérationnel pour comparer une température détectée provenant du capteur de température avec une température de point de consigne provenant de la commande de zone.

10. Système CVC multi-distribué comprenant au moins une unité extérieure et une pluralité d'unités intérieures et le système selon une quelconque des revendications 1 à 6, dans lequel :
le module d'interface d'équipement comprend une pluralité de modules d'interface d'équipement, un pour chaque unité intérieure ; et
la commande comprend une commande de zone opérationnelle pour commander le fonctionnement de toutes les unités intérieures en communiquant avec le module d'interface d'équipement et le récepteur de chaque unité intérieure.

11. Système CVC multi-distribué comprenant :
au moins une unité extérieure ;
une pluralité d'unités intérieures (210) ayant chacune un récepteur infrarouge (230) ;
le système selon une quelconque des revendications 1 à 6 ;
dans lequel la commande comprend une commande de zone (250) ; et
dans lequel le module d'interface d'équipement comprend une pluralité d'émetteurs récepteurs de radiofréquence (240), dont chacun est configuré pour une communication avec la commande de zone (250) via des signaux de radiofréquence et pour une communication avec un récepteur correspondant des récepteurs infrarouges (230) via des signaux infrarouges, moyennant quoi les émetteurs récepteurs de radiofréquence (240) sont opérationnels pour communiquer des instructions de la commande de zone (250) aux récepteurs (230), en permettant ainsi que le fonctionnement de toutes les unités intérieures (210) puisse être commandé par la commande de zone (250).

12. Système CVC multi-distribué selon la revendication 10 ou 11, dans lequel :
la commande de zone est configurée avec une connectivité à l'Internet, de sorte que le fonctionnement de toutes les unités intérieures puisse être commandé par un utilisateur via l'Internet lorsque la commande de zone est connectée à l'Internet.

13. Procédé de commande à distance sans fil d'un système CVC distribué ayant au moins une unité extérieure et au moins une unité intérieure (210) comprenant :
un fournisseur de services réglant à distance une instructions pour au moins une unité intérieure (210) via un compteur de consommation intelligent (260) connecté à une commande de zone (250) ;
transmettre sans fil l'instruction de la commande de zone (250) à un module d'interface d'équipement (240) qui convertit l'instruction en une commande pour au moins une unité intérieure (210) ; et
transmettre sans fil la commande à un récepteur (230) d'au moins une unité intérieure (210), moyennant quoi le fonctionnement d'au moins une unité intérieure (210) peut être commandé conformément à la commande,
dans lequel le module d'interface d'équipement (240) comprend un collecteur pour intercepter des instructions contraires provenant d'une commande distante à infrarouges portative (220) d'au moins une unité intérieure (210), pour permettre ainsi au module d'interface d'équipement (240) d'annuler les instructions contraires.

14. Procédé selon la revendication 13, dans lequel le procédé inclut :
un utilisateur réglant à distance une instruction pour au moins une unité intérieure via une commande de zone ou l'Internet connecté à la commande de zone.

15. Procédé selon la revendication 13 ou 14, dans lequel :
transmettre sans fil l'instruction à un module d'interface d'équipement comprend de transmettre sans fil des signaux de radiofréquence à un émetteur récepteur de radiofréquence ; et transmettre sans fil la commande à récepteur comprend de transmettre sans fil des signaux infrarouges à un récepteur infrarouge d'au moins une unité intérieure et/ou
transmettre sans fil l'instruction à un module d'interface d'équipement comprend de transmettre sans fil les instructions à une pluralité de modules d'interface d'équipement ; et transmettre sans fil la commande à un récepteur d'au moins une unité intérieure comprend de transmettre sans fil la commande à une pluralité de récepteurs d'une pluralité d'unités intérieures, de sorte que le fonctionnement de toutes les unités intérieures puisse être commandé par la commande de zone.
